# EUROPÄISCHE PATENTSCHRIFT

(11) **EP 1 104 795 B1**
(45) Veröffentlichungstag und Bekanntmachung des Hinweises auf die Patenterteilung: **10.09.2003**
(21) Anmeldenummer: 00123279.2
(22) Anmeldetag: 27.10.2000
(51) Int. Cl.: C09J 7/02, B65H 19/18

(54) **Klebeband**
Adhesive tape
Ruban adhésif

(30) Priorität: 02.12.1999 DE 19958223
(43) Veröffentlichungstag der Anmeldung: 06.06.2001
(73) Patentinhaber: Tesa AG, 20253 Hamburg (DE)
(72) Erfinder: Storbeck, Reinhard, 22459 Hamburg (DE); Eikmeier, Markus, 23738 Lensahn (DE)

(56) Entgegenhaltungen:
- EP-A- 1 022 245
- DE-A- 19 628 317
- US-A- 5 692 699

## Beschreibung

Die Erfindung betrifft ein Klebeband für den fliegenden Rollenwechsel sowie ein Spliceverfahren unter Einsatz eines solchen Klebebandes, insbesondere in Papierveredelungsmaschinen, Druckmaschinen und dergleichen.

Der fliegende Rollenwechsel ist in Papierfabriken, folienproduzierenden Betrieben oder dergleichen ein-gängiges Verfahren, um ohne die schnell laufenden Maschinen anhalten zu müssen eine alte, fast abgespulte Papierrolle durch eine neue zu ersetzen. Dabei werden doppelseitig klebende Selbstklebebänder, sogenannte Fixe, eingesetzt, die hochklebrig und -tackig sind, Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen nur etwa 4 - 5 Minuten Zeit bleibt.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Bahnlagen und das dazwischen klebende Fix das Resultat sind: ein in der Industrie unerwünschtes Resultat.

Für diese "Spitzenverklebung" beim fliegenden Rollenwechsel gibt es diverse Produkte im Handel, sogenannte Splicingklebebänder, die beidseitig mit Haftklebemasse beschichtet sind. Solche Klebebänder sind u.a. unter der.Bezeichnung tesafix (Beiersdorf) im Handel.

Im Stand der Technik sind vielfältige Klebebänder für derartige Zwecke beschrieben. So offenbart EP 418 527 A2 ein Verfahren zum Vorbereiten einer Rolle bahnförmigen Bedruckstoffs für automatische Rollenwechsler und einen dafür geeigneten Klebstreifen. Auch DE 40 33 900 A1 beschreibt ein für eine Splice-Stelle geeignetes Klebeband. Nachteilig sind jedoch klebende Bereiche, die nach erfolgtem Spliceverfahren offen liegen.

Das nichtklebende Abdecken von sonst offen liegenden klebenden Bereichen lehrt US 5,702,555 für mehr statische Belastungen einer Sicherung eines Rollenanfangs, während DE 196 32 689 A2 ein derartiges Klebeband für dynamische Belastung beim Spliceverfahren offenbart, dessen Papierträger spaltet und mit seinen Resten die Klebemassen abdeckt.

Von dieser Art ist auch ein Klebeband gemäß DE 196 28 317 A1, ebenfalls für ein Spliceverfahren. Dieses Klebeband trägt an seiner nichtklebenden Rückseite ein doppelseitig klebendes Klebeband (6), das einen splicefreudigen Papierträger (7) aufweist, der beim Spliceverfahren spaltet (7a, 7b, Figur 3) und die jeweiligen Kleber abdeckt. Dieses doppelseitig klebende Klebeband (6) schließt seitlich mit der einen Seite des Papierträgers (2) ab, ist also längs einer der Längskanten des Klebebandes angeordnet.

In der Praxis zeigen sich auch bei diesen Klebebändern Nachteile, zunächst dadurch, daß ein Splice nicht gelingt, vielmehr als Reißer endet, ohne daß ein Grund dafür ersichtlich wäre.

Insbesondere mußte die Aufgabe gelöst werden ein Klebeband zu entwickeln mit dem bahnförmiges Trägermaterial, welches unter Zugspannung steht, sicher miteinander zu verbinden.

Aufgabe der Erfindung war es, hier Abhilfe zu schaffen.

Gelöst wird dies durch ein Klebeband und Spliceverfahren, wie dies im Einzelnen in den Ansprüchen näher gekennzeichnet ist. Um Wiederholungen zu vermeiden, wird auf die Ansprüche ausdrücklich Bezug genommen, insbesondere auch betreffend bevorzugte Ausführungsformen.

Erfindungsgemäß gelingen Spleisse ohne Reißer, wobei ein bevorzugtes Merkmal der vorgesehene Versatz bzw. der Abstand V des doppelseitigen Klebebandes DO von der Längskante LK des Klebebandes darstellt.

Erfindungsgemäß ergeben sich für die Praxis relevante Vorteile:
- Reißkraft und Reißdehnungsverhalten sind bei Foliensystemen deutlich besser steuerbar als bei Papierträgem. Damit lassen sich auch sehr reißempfindliche Trägersysteme spleißen. Die Produkte können stufenlos an die zu spleißenden Trägersysteme angepaßt werden.
- Foliensysteme zeigen keine klimatisch bedingten Dimensionsänderungen. dadurch können die zum Spleißen vorbereiteten Ballen länger gelagert werden. Ballenware, die mit Papiersystemen gespleißt wird, muß nach der Vorbereitung dem Spleißvorgang unmittelbar zugeführt werden (natürlich abhängig von den klimatischen Umgebungsbedinungen).
- Foliensysteme eignen sich besser für die maschinelle Verarbeitung (=automatische Anbringung des Spleißes) aufgrund einer erhöhten Reißfestigkeit und besseren Planlage.
- Coextrudierte polymere Verbundsysteme lassen sich in einem Arbeitsgang definiert herstellen bei preisgrünstiger Herstellung und wenig Schwankungsparametern in der Produktion.

### Spaltsysteme

Das spaltbare System hat vorteilhaft einen deutlich kleineren Spaltwiderstand als der Hauptträger (P1), der die Zugkräfte aufnehmen muß. Eine ausreichende Differenz ist hilfreich für das Funktionsprinzip des erfindungsgemäßen Produktes.

Als Spaltsysteme kommen zum Beispiel folgende Papiere oder Papierverbundsysteme oder polymere Verbundsysteme in Frage:
- Duplex Papiere: Diese Papiere sind handelsüblich und werden z.B. bei der Herstellung von Filtermaterialien und Tapeten eingesetzt.
- Leicht spaltende Papiere: Die Einstellung der Spaltarbeit erfolgt über die Verdichtung der Papierfaserstruktur. Je geringer die Verdichtung ist, desto geringer ist die Spaltarbeit.
   Geeignete Papiertypen sind beispielsweise einseitig glatte Naturpapiere oder auch . hochsatinierte Kraftpapiere.
- Geleimte Papiersysteme oder geleimte Foliensysteme: Die Spaltarbeit wird über die Chemie des Haftklebestoffes oder des Lacksystems eingestellt. Der Leim- oder Haftklebstoff soll in das Papier nur unwesentlich eingedrungen sein.
- Coextrudierte polymere Verbundsysteme: Extrudierte Mehrschichtsysteme mit geringer Verbundfestigkeit zwischen den Grenzschichten.
- Polymer Vliesstoffe: Die Spaltarbeit wird über die Chemie der Fixierstoffe eingestellt.

Hilfreich sind für die Ziele der vorliegenden Erfindung auch saubere Schnittkanten. Beim Schneidvorgang sollen keine Masseausquetschungen entstehen. Die spaltfähige Ansatzfläche des Spaltmaterials soll insbesondere nicht mit Haftklebemasse bedeckt werden.

Die Einrückung des spaltbaren Materials bzw. der Abstand V soll erfindungsgemäß 1,5 mm - 3,5 mm betragen.

Als Spaltpapier kommen diverse spaltbaren Papiersysteme in Frage, wie
- Duplexpapiere (definiert zusammen laminierte Papiere, der Spaltvorgang verläuft extrem homogen, es entsehen keine Spannungsspitzen, z.B. durch inhomogene Verdichtung. Diese Papiere werden zur Herstellung von Tapeten und Filtern eingesetzt.
- Leicht spaltbare Papiersysteme
- Definiert zusammen geleimte hochverdichtete Papiere (⇒ Papier mit einer hoher Spaltfestigkeit). Die Leimung kann beispielsweise mit Stärke, stärkehaltigen Derivaten, Tapetenkleister auf Basis von Methylcellulose (Methylan ®, Henkel KGaA, Düsseldorf) aber auch auf Basis von Polyvinylalkoholderivaten erfolgen.
- Die Breite des Spaltsystems beträgt bevorzugt 3 - 35 mm, insbesondere 6 - 12 mm.

Als Selbstklebemassen kommen alle typischen Haftklebemasse in Frage, insbesondere
- Acrylate (wasserlöslich und nicht wasserlöslich)
- Naturkautschukmassen, Synthesekautschukmassen

Das Spliceverfahren, hier die Verklebung mit dem Splicetape kann insbesondere so erfolgen, daß das Klebeband rechtwinklig zur laufenden Bahn verklebt wird (Nachteil: Spaltbares System muß in Sekundenbruchteilen komplett spalten), aber auch im spitzen Winkel (Vorteil: Spaltvorgang läuft als Welle durch das Klebeband), insbesondere bis zu 45°, vor allem bis zu 15 °.

Die Zeichnung zeigt eine schematische Darstellung eines erfindungsgemäßen Klebebandes im Querschnitt und soll die Erfindung damit beispielhaft erläutern. Die Bezugszeichen sind in den Ansprüchen erläutert.

### Prüfmethoden

Messung der Spaltfestigkeit von Papieren oder anderen Verbundsystemen
**Zweck- und Anwendungsbereich**
   Prüfung der Festigkeit von Papier oder anderen aus Fasern aufgebauten Materialien in z-Richtung oder Verbundsystemen. Ermittelt wird die Spaltfestigkeit.
   Die Spaltfestigkeit ist die Kraft, die zu überwinden ist um einen Prüfkörper in z-Richtung zu spalten.
**Prinzip der Methode**
   Zwei Klebebänder werden gegenüberliegend auf dem zu prüfenden System aufgebracht und an der Zugprüfmaschine in einem Winkel von 180°C auseinander gezogen. Die dabei zu überwindende Kraft zum Spalten des Systems ist die Spaltfestigkeit.
**Geräte und Prüfklima**
   Zugprüfmaschine
   Klingen- oder Streifenschneider 15mm Breite
   Handaufroller 2kg
   Prüfklima: 23 +/- 1°C, 50 +/- 5% rel. Feuchte
**Materialien**
   Klebeband wie z.B. testband 7475
   Breite 20 mm, Streifen ca. 20 cm Länge
**Prüfmuster**
   DINA 4 Blätter
   Die Muster müssen mind. 16 h im Normklima konditionieren.
**Versuchsdurchführung**
   Zwei Klebebänder werden von beiden Seiten gegenüberliegend auf das zu prüfende System aufgelegt und leicht mit dem Finger angestrichen, um Lufteinschlüsse zu vermeiden.
   Danach wird mit dem Handroller je Seite 2* zügig über den Verbund gerollt, um eine einwandfreie Verklebungsfestigkeit zu erreichen.
   Die Verklebung ist so herzustellen, daß auf einer Seite die Enden des Klebebandes über den Prüfkörper herausragen und unter Falten auf sich selbst zu einem Anfasser verklebt werden können.
   Die Prüfrichtung kann je nach Prüfziel in Laufrichtung oder quer zur Laufrichtung des Prüfkörpers erfolgen.
   Mit dem Stahllineal werden mittig des Verbundes 15 mm Breite Streifen in einer Länge von ca. 20 cm herausgeschnitten. Sodann werden die beiden Anfasser des überragenden Klebebandes per Hand auseinandergezogen, bis ein Spalten des Prüflings erkennbar ist.
   Dann wird der Prüfkörper an den Anfassern frei hängend oben und unten in die Zugprüfmaschine eingespannt und der Rest des Streifens unter konstanter Geschwindigkeit bei 300 mm/min auseinandergezogen.
   Es ist bei sehr dünnenen Systemen darauf zu achten, daß das Ergebnis nicht dadurch verfälscht wird, daß die gegenüberliegenden Kanten des Klebebandes am Rand des Prüfkörpers Kontakt haben und verkleben.
**Auswertung und Beurteilung**
   Die Spaltfestigkeit des Prüfkörpers wird in cN/cm angegeben.
   Aus 5 ermittelten Werte werden der Mittelwert angegeben.

### Anwendungsbeispiele

Die nachfolgenden Beispiele beschreiben erprobte Versuchsprodukte für den fliegenden Rollenwechsel, die Splicebedingungen und die Spliceergebnisse. Die erprobten Produktaufbauten sind in Tabelle 1 dargestellt.

Die Zeichnung beschreibt den dazugehörenden Produktaufbau.

### Beschreibung der eingesetzten Systeme:

Folgende Streichrohpapiere und Kunststoffolien wurden für die Spliceversuche eingesetzt:
- **[ A ]** Streichrohpapier (Flächengewicht 134 g/m², Dicke 167 µm)
   z.B.: Sappi Alfeld AG, 31061 Alfeld
- **[ B ]** MOPP-Folie (Flächengewicht 45 g/m², Dicke 50µm)
   z. B.: Nowofol Kunststoffprodukte GmbH & Co KG, 83313 Siegsdorf
- **[ C ]** BOPP-Folie Trespaphan GND 50 (Flächengewicht 44 g/m², Dicke 50 µm)
   z. B.: Hoechst AG, Frankfurt

Folgende Spaltsysteme wurden für die Versuchsprodukte eingesetzt:
- **[ D ]** Duplex Filterpapier
- Flächengewicht 51 g/m², Dicke 90 µm
   Spaltarbeit quer 34 - 44 cN/ cm
- **[ E ]** Einseitig glattes Naturpapier
   Flächengewicht 57 g/m², Dicke 74 µm
   Spaltarbeit quer 33 - 38 cN/ cm
- **[ F ]** Geleimtes Papierverbundsystem mit definierter Spaltarbeit.
   Zwei maschinenglatte Rohpapiere werden mit einem stärkehaltigen Leim zusammengeklebt. Flächengewicht jeweils 54 g/m², Dicke 66 µm. Die Spaltarbeit des Verbundes quer beträgt 28 - 32 cN/ cm.
- **[ G ]** Coextrudiertes Folienverbundsystem mit definierter Spaltarbeit.
   Durch Coextrusion wird ein Zweischichtsystem hergestellt. Die Spaltarbeit des Verbundes quer beträgt 30 - 35 cN/ cm.

Folgende Trägerfolien wurden für die Versuchsprodukte eingesetzt:
- **[ H ]** BOPP-Folie
   Flächengewicht 44 g/m², Dicke 50 µm, Höchstzugkraft quer ≥190 N/ 15 mm,
- **[ I ]** PET-Folie
   Flächengewicht 70 g/m², Dicke 50 µm, Höchstzugkraft quer 120 - 225 N/ 15 mm
- **[ J ]** aluminisierte PET-Folie
   Flächengewicht 35 g/m², Dicke 25 µm, Höchstzugkraft quer 78 N/ 15 mm
- **[ K ]** Aluminium-Folie
   Flächengewicht 216 g/m², Dicke 80 µm, Höchstzugkraft quer 72 - 135 N/ 15 mm

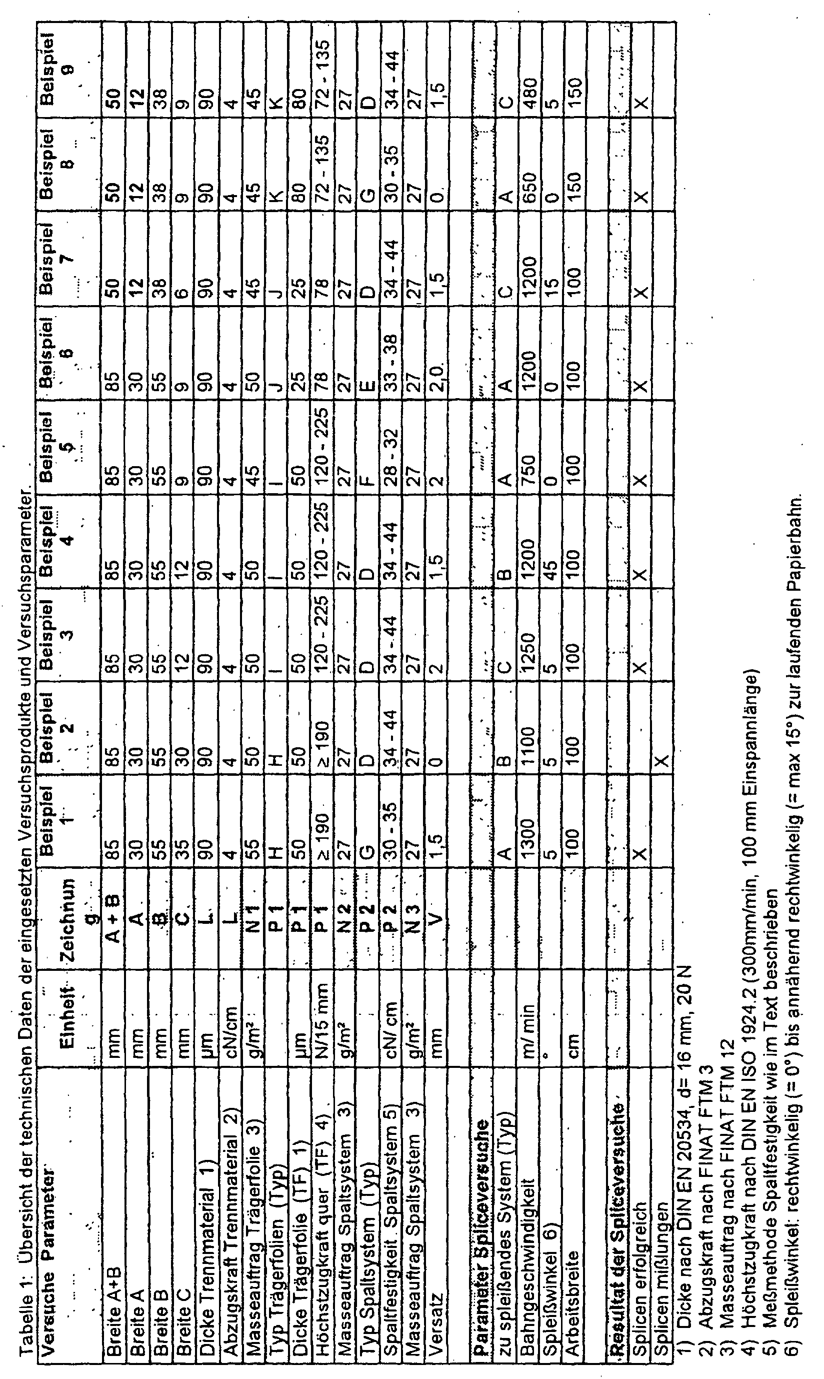

## Patentansprüche

1. Klebeband mit klebender Vorderseite und nichtklebender Rückseite sowie zwei Längskanten für den fliegenden Rollenwechsel, mit
a) einem Folienträger (P1), der einseitig an der Vorderseite mit einer Selbstklebemasse (N1) beschichtet ist, wobei
b) ein Teil der nichtklebenden Rückseite des Folienträgers (P1) mit einem doppelseitig klebenden Klebeband (DO) ausgerüstet ist, welches einerseits ein spaltfähiges System (P2) aufweist, das beideseitig mit Selbstklebemasse (N2, N3) beschichtet ist, wobei
c) das doppelseitig klebende Klebeband in einem Abstand (V) von 1,5 bis 3,5 mm von der einen Längskante (LK) des Klebebandes angeordnet ist.

2. Klebeband nach Anspruch 1, **dadurch gekennzeichnet, daß**
die Selbstklebemassen (N1, N2, N3) Haftklebemassen auf Basis von Acrylaten oder Kautschuk sind.

3. Klebeband nach Anspruch 1, **dadurch gekennzeichnet, daß**
die Selbstklebemassen (N1, N2, N3) wasserlösliche Haftklebemassen auf Basis von Acrylaten sind.

4. Klebeband nach Anspruch 1, **dadurch gekennzeichnet, daß**
die Selbstklebemasse (N1) mit einem Trennmaterial (L) abgedeckt ist.

5. Klebeband nach Anspruch 4, **dadurch gekennzeichnet, daß**
das Trennmaterial (L) mit einem Schlitz (SC) versehen ist.

6. Klebeband nach Anspruch 5, **dadurch gekennzeichnet, daß**
der Schlitz (SC) in einem Abstand von 5 bis 40 mm von der Längskante (LK 2) des Klebebandes angeordnet ist, welche der Längskante (LK) gegenüberliegt, in deren Nähe das doppelseitig klebende Klebeband (DO) angeordnet ist.

7. Klebeband nach Anspruch 1, **dadurch gekennzeichnet, daß**
das doppelseitig klebende Klebeband (DO) 3 bis 35 mm, insbesondere 6 bis 12 mm breit ist.

8. Klebeband nach Anspruch 1, **dadurch gekennzeichnet, daß**
die Spaltfähigkeit des spaltbaren Systems (P2) 20 bis 70 cN/cm, insbesondere 22 bis 60 cN/cm, ganz besonders 25 bis 50 cN/cm beträgt.

9. Spliceverfahren, bei dem der obersten Papier- oder Folienbahn einer Rolle ein Klebeband nach einem der Ansprüche 1 bis 9 teilweise hinterklebt wird, während das auf der Rückseite des Klebebandes befindliche doppelseitig klebende Klebeband seinerseitz mit der darunter liegenden Bahn verklebt und damit die oberste Bahn sichert, wobei zunächst nur ein Teil des gegebenenfalls auf der Selbstklebemasse befindlichen Trennmaterials abgezogen wurde, so daß der zum Spliceverfahren benötigte Teil der Selbstklebemasse noch mit Trennmaterial abgedeckt ist und die Rolle in diesem Zusatnd keine freie klebende Fläche aufweist, worauf zur abschließenden Vorbereitung des Spliceverfahrens das gegebenenfalls noch vorhandene Trennmaterial entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Papier- oder Folienbahn gedrückt wird, wobei die offenliegende Selbstklebemasse des Klebebandes mit der alten Papier- oder Folienbahn bei im wesentlichen gleichen Geschwindigkeiten der Papier- oder Folienbahnen verklebt, während zugleich das spaltfähige System spaltet und beide Selbstklebemassen, die auf ihm beschichtet waren, mit seinen Resten nichtklebend abdeckt.

10. Spliceverfahren nach Anspruch 9, **dadurch gekennzeichnet, daß**
das Klebeband rechtwinklig zur laufenden Bahn verklebt wird oder aber im spitzen Winkel von bis zu 45°, insbesondere bis zu 15°.

## Claims

1. Adhesive tape with adhesive front side and nonadhesive rear side and two long edges for flying reel change, having
a) a film backing (P1), which is coated on one side - the front side - with a self-adhesive composition (N1),
b) part of the nonadhesive rear side of the film backing (P1) being equipped with a double-sided adhesive tape (DO) which has, on one side, a cleavable system (P2) coated on both sides with self-adhesive composition (N2, N3), wherein
c) the double-sided adhesive tape is arranged at a distance (V) of 1.5 to 3.5 mm from one long edge (LK) of the adhesive tape.

2. Adhesive tape according to Claim 1, **characterized in that** the self-adhesive compositions (N1, N2, N3) are pressure-sensitive adhesive compositions based on acrylates or rubber.

3. Adhesive tape according to Claim 1, **characterized in that** the self-adhesive compositions (N1, N2, N3) are water-soluble adhesive compositions based on acrylates.

4. Adhesive tape according to Claim 1, **characterized in that** the self-adhesive composition (N1) is masked with a release material (L).

5. Adhesive tape according to Claim 4, **characterized in that** the release material (L) is provided with a slit (SC).

6. Adhesive tape according to Claim 5, **characterized in that** the slit (SC) is arranged at a distance of 5 to 40 mm from that long edge (LK 2) of the adhesive tape which is opposite the long edge (LK) close to which the double-sided adhesive tape (DO) is arranged.

7. Adhesive tape according to Claim 1, **characterized in that** the double-sided adhesive tape (DO) is 3 to 35 mm wide, especially 6 to 12 mm wide.

8. Adhesive tape according to Claim 1, **characterized in that** the cleavage strength of the cleavable system (P2) is 20 to 70 cN/cm, especially 22 to 60 cN/cm, very particularly 25 to 50 cN/cm.

9. Splicing method, in which an adhesive tape according to one of Claims 1 to 9 is partly stuck behind the top paper or film web of a reel, while the double-sided adhesive tape on the rear side of the adhesive tape is for its part stuck to the web beneath it and therefore secures the top web, firstly only part of the release material possibly located on the self-adhesive composition being pulled off, so that that part of the self-adhesive composition needed for the splicing method is still masked with release material and, in this state, the reel has no free adhesive area, after which, in order to prepare for the splicing method finally, any release material still present is removed, whereupon the new reel equipped in this way is placed beside an old reel which has been almost completely unwound and is to be replaced, and is accelerated to the same rotary speed as said old reel and is then pressed against the old paper or film web, the exposed self-adhesive composition of the adhesive tape sticking to the old paper or film web at essentially equal speeds of the paper or film webs, while at the same time the cleavable system cleaves and, with its remains, nonadhesively masks both self-adhesive compositions which were coated on said system.

10. Splicing method according to Claim 5, **characterized in that** the adhesive tape is bonded to the running web at right angles or else at an acute angle of up to 45°, especially up to 15 °.

## Revendications

1. Ruban adhésif comportant un recto adhésif et un verso non adhésif ainsi que deux arêtes longitudinales pour l'échange volant de rouleau, comportant
a) un support en film (P1), qui est recouvert d'un côté sur son recto d'une masse autocollante (N1),
b) une partie du verso non adhésif du support en film (P1) étant équipée d'un ruban adhésif collant des deux côtés (DO) qui présente d'une part un système dissociable (P2), qui est recouvert des deux côtés d'une masse autocollante (N2, N3),
c) le ruban adhésif collant des deux côtés étant disposé à une distance (V) de 1,5 à 3,5 mm d'une des arêtes longitudinales (LK) du ruban adhésif.

2. Ruban adhésif selon la revendication 1, **caractérisé en ce que**
les masses autocollantes (N1, N2, N3) sont des masses de colle de contact à base d'acrylates ou de caoutchouc.

3. Ruban adhésif selon la revendication 1, **caractérisé en ce que**
les masses autocollantes (N1, N2, N3) sont des masses de colle de contact solubles à l'eau à base d'acrylates.

4. Ruban adhésif selon la revendication 1, **caractérisé en ce que**
la masse autocollante (N1) est recouverte d'une matière de séparation (L).

5. Ruban adhésif selon la revendication 4, **caractérisé en ce que**
la matière de séparation (L) est munie d'une fente (SC).

6. Ruban adhésif selon la revendication 5, **caractérisé en ce que**
la fente (SC) est disposée à une distance de 5 à 40 mm de l'arête longitudinale (LK 2) du ruban adhésif qui se trouve en face de l'arête longitudinale (LK) à proximité de laquelle est disposé le ruban adhésif collant des deux côtés (DO).

7. Ruban adhésif selon la revendication 1, **caractérisé en ce que**
le ruban adhésif collant des deux côtés (DO) a une largeur de 3 à 35 mm, notamment de 6 à 12 mm.

8. Ruban adhésif selon la revendication 1, **caractérisé en ce que**
la dissociabilité du système dissociable (P2) est de 20 à 70 cN/cm, notamment 22 à 60 cN/cm, tout particulièrement 25 à 50 cN/cm.

9. Procédé d'épissure, dans lequel est collé partiellement derrière la bande de papier ou de film située le plus au dessus d'un rouleau un ruban adhésif selon l'une quelconque des revendications 1 à 9, tandis que le ruban adhésif collant des deux côtés se trouvant au recto du ruban adhésif est de son côté collé à la bande située dessous et bloque ainsi la bande située dessus, d'abord seulement une partie de la matière de séparation se trouvant éventuellement sur la masse autocollante ayant été retirée, de sorte que la partie nécessaire au procédé d'épissure de la masse autocollante est encore recouverte de matière de séparation et que le rouleau ne présente dans cet état pas de surface collante libre, sur quoi, pour terminer la préparation du procédé d'épissure, la matière de séparation éventuellement encore existante est enlevée, sur quoi le nouveau rouleau ainsi équipé est placé près d'un ancien rouleau presque complètement dévidé et à changer et est accéléré à la même vitesse de rotation que celui-ci, est ensuite poussé contre l'ancienne bande de papier ou de film, la masse autocollante dégagée du ruban adhésif étant collée à l'ancienne bande de papier ou de film avec des vitesses substantiellement égales des bandes de papier ou de film, tandis qu'en même temps le système dissociable se dissocie et recouvre avec ses restes, sans coller, les deux masses autocollantes qui étaient plaquées sur lui.

10. Procédé d'épissure selon la revendication 9, **caractérisé en ce que**
le ruban adhésif est collé en angle droit par rapport à la bande en circulation, ou alors en angle aigu allant jusqu'à 45°, notamment jusqu'à 15°.
